# EUROPÄISCHE PATENTSCHRIFT

(11) **EP 2 056 956 B1**
(45) Veröffentlichungstag und Bekanntmachung des Hinweises auf die Patenterteilung: **05.12.2012**
(21) Anmeldenummer: 07801715.9
(22) Anmeldetag: 16.08.2007
(51) Int. Cl.: B29C 63/06, B29C 65/36, B29C 65/02, B01D 69/02, B29C 65/38, B01D 63/02, B29L 31/60

(54) **VERFAHREN ZUM ZUSAMMENFASSEN VON HOHLFASERN ZU EINEM BÜNDEL UND MIT DIESEM VERFAHREN HERGESTELLTES HOHLFASERBÜNDEL**
METHOD FOR COMBINING HOLLOW FIBRES INTO A BUNDLE AND HOLLOW FIBRE BUNDLE PRODUCED BY SAID METHOD
PROCÉDÉ POUR RASSEMBLER DES FIBRES CREUSES EN UN FAISCEAU ET FAISCEAU DE FIBRES CREUSES PRODUIT GRÂCE À CE PROCÉDÉ

(30) Priorität: 28.08.2006 DE 102006040214
(43) Veröffentlichungstag der Anmeldung: 13.05.2009
(73) Patentinhaber: Fresenius Medical Care Deutschland GmbH, 61352 Bad Homburg (DE)
(72) Erfinder: HÖRMANN, Jörn, 66265 Heusweiler (DE)
(74) Vertreter: Laufhütte, Dieter
(86) Internationale Anmeldenummer: PCT/EP2007/007264
(87) Internationale Veröffentlichungsnummer: WO 2008/025459

(56) Entgegenhaltungen:
- EP-A- 0 662 387
- DE-A1- 3 102 331
- DE-A1- 3 611 623
- DE-A1- 19 806 293

## Beschreibung

Die Erfindung betrifft ein Verfahren zum Zusammenfassen von Fasern oder auch Fäden, insbesondere von temperaturempfindlichen Hohlfasern zu einem Bündel.

Hohlfasern können für die Durchführung von Membrantrennverfahren als Membran, nämlich als Hohlfasermembran eingesetzt werden. Solche Hohlfasern werden deshalb auch als Membranfasern bezeichnet. Insbesondere werden Hohlfasermembranen in der Medizintechnik eingesetzt. Es sind aber auch diverse andere Anwendungsgebiete bekannt.

Hohlfaserbündel werden in der Medizintechnik z. B. für die Herstellung von Filtern für extrakorporale Blutbehandlungsverfahren, z. B. für die Hämodialyse, die Hömofiltration und die Hämodiafiltration eingesetzt. Nach dem Stand der Technik werden Hohlfasermembranen für die Dialyse durch kontinuierlich arbeitende Hohlfaserspinnanlagen hergestellt. Die kontinuierlich aus der Hohlfaserspinnanlage austretenden Hohlfasern werden meist chargenweise z. B. auf langsam rotierende Haspelräder aufgewickelt. Es sind aber auch andere Haspelvorrichtungen zur Aufnahme von Hohlfasern bekannt, z. B. mit feststehenden Wickeldornen. Die Haspelräder verfügen über gleichmäßig auf Umfang verteilte Wickeldorne, auf denen die Hohlfasern aufliegen. Dadurch werden die Hohlfasern zwischen den Wickeldornen frei gespannt. Die Abstände zwischen den Wickeldornen sind so gewählt, dass zwischen jeweils zwei Wickeldornen ein Hohlfaserbündel entsteht. Diese Hohlfaserbündel werden in Handarbeit mit einer dünnen Wickelfolie aus Kunststoff umwikkelt, so dass das Hohlfaserbündel einen Kreisquerschnitt mit vorher festgelegtem definiertem Durchmesser erhält. Die Wickelfolie wird derart um das Hohlfaserbündel gelegt, dass sie sich überlappt. Im Überlappungsbereich wird die Wickelfolie dann mit Klebestreifen manuell fixiert. Sobald das Hohlfaserbündel auf diese Weise fixiert ist, wird es wiederum in Handarbeit mit einem Schneidgerät auf die gewünschte Länge abgeschnitten. Schließlich wird das Hohlfaserbündel in eine zylindrische Filterkartusche eingeführt. Nach dem Einführen des Hohlfaserbündels wird die Wickelfolie vom Hohlfaserbündel abgezogen und entsorgt. Derartige Herstellverfahren sind beispielsweise in der US-A-4,276,687 beschrieben.

Aus der Druckschrift DE 198 06 293 A1 ist darüber hinaus ein Verfahren und eine Vorrichtung bekannt, mit Hilfe dessen ein Bündel aus zueinander parallelen Fasern oder Filamenten mit einem Materialbogen umwickelt werden kann sowie die Möglichkeit, diesen Materialbogen ohne Schädigung des Bündels thermisch zu verschweißen. Die Druckschrift EP 0 662 387 A2 offenbart weiterhin, eine Folie zur Einfassung eines Bündels von Hohlfasern mittels Ultraschallschweißen zu fixieren. DE 36 11 623 A1 offenbart weiterhin das Verschweißen eines Rohrs.

Aufgabe der vorliegenden Erfindung ist es, das Zusammenfassen von Hohlfasern zu einem Bündel mittels einer Wickelfolie zu automatisieren. Eine weitere Aufgabe der vorliegenden Erfindung ist es, eine Beschädigung der empfindlichen Hohlfasern während der automatischen Fixierung der Wickelfolie zu verhindern.

Erfindungsgemäß wird diese Aufgabe durch ein Verfahren gemäß Anspruch 1 gelöst. Dieses Verfahren besteht aus folgenden Schritten:
- chargenweises Aufwickeln von kontinuierlich hergestellten Hohlfasern auf Haspelvorrichtungen,
- Umwickeln der jeweils zwischen zwei Wickeldornen der Haspelvorrichtung gespannten bündelartig zusammengelegten Hohlfasern mit einer Wickelfolie derart, dass die Kante der Wickelfolie, die beim Umwickeln der Wickelfolie unmittelbar auf dem Hohlfaserbündel liegt, nach innen zum Hohlfaserbündel hin umgeschlagen ist und
- Verschweißen der überlappenden Kantenbereiche der Wickelfolie.

Gemäß der Erfindung wird die Fixierung durch Klebestreifen durch ein automatisches Schweißverfahren, vorzugsweise ein automatisches Wärmeimpuls-Schweißverfahren ersetzt.

Um im Schweißbereich, das heißt im Überlappungsbereich der Folie eine thermische Beschädigung der äußerst empfindlichen Hohlfasern zu verhindern, wird erfindungsgemäß die Kante der Wickelfolie zum Hohlfaserbündel hin umgeschlagen, die unmittelbar auf dem Hohlfaserbündel liegt. Durch dieses einfache Mittel wird ohne nennenswerte Mehrkosten das Aufschmelzen der Folieninnenseite selbst dann mit Sicherheit ausgeschlossen, wenn das Schweißwerkzeug nicht ganz korrekt parametriert, das heißt nicht korrekt eingestellt wurde.

Bevorzugte Ausgestaltungen der Erfindung ergeben sich aus den sich an den Hauptanspruch anschließenden Unteransprüchen.

Demnach kann die Wickelfolie bei einer Automatisierung des Prozesses über eine Vorrichtung, die vor dem Einziehen der Folie in die Wickelvorrichtung eingegliedert wird, an ihrem einen Randbereich gefaltet werden. Es ist aber auch möglich, die Wickelfolie mit bereits vorgefalteter Kante bereitzustellen.

Das Verschweißen der Wickelfolie kann mittels allgemein bekannter Kunststoffschweißverfahren, vorzugsweise durch Wärmeimpulsschweißwerkzeuge erfolgen. Die Schweißzeit kann in Abhängigkeit von den gewählten Folienwerkstoffen und Foliendicken im Bereich < 10s liegen und kann beim Wärmeimpulsschweißen vorzugsweise ca. 0,3 bis 0,5 s betragen. Es können aber auch andere Kunststoffschweißverfahren, wie z. B. dauerbeheizte Werkzeuge oder Laserschweißverfahren eingesetzt werden.

Die überlappenden Kantenbereiche der Folie können vorzugsweise nur an voneinander beabstandeten Punkten miteinander verschweißt werden. Es ist aber auch möglich die überlappenden Kantenbereiche der Folie mittels einer durchgehenden Schweißnaht oder mehrerer durchgehender Schweißnahtabschnitte miteinander zu verschweißen.

Teil der Erfindung ist auch ein Hohlfaserbündel, das nach dem vorgenannten Verfahren hergestellt ist. Dort ist erfindungsgemäß in einem Zwischenproduktionsschritt vor dem Einführen in ein Gehäuse, das beispielsweise ein Dialysatorgehäuse sein kann, eine Wickelfolie um das Hohlfaserbündel gewickelt, die an ihrem auf dem Hohlfaserbündel aufliegenden Randbereich zu den Hohlfasern nach innen hin umgeschlagen ist.

Weitere Merkmale, Einzelheiten und Vorteile der Erfindung werden anhand eines in der Zeichnung dargestellten Ausführungsbeispiels näher erläutert. Es zeigen:
- Figur 1:: eine schematische Darstellung eines Verfahrensschrittes bei der Herstellung eines Hohlfaserbündels,
- Figur 2:: eine Darstellung gemäß Figur 1 nach dem erfindungsgemäßen Verfahren,
- Figur 3:: eine schematische Darstellung eines Schweißwerkzeugs, wie es bei dem erfindungsgemäßen Verfahren angewandt werden kann und
- Figur 4:: eine perspektivische Darstellung eines Hohlfaserbündels.

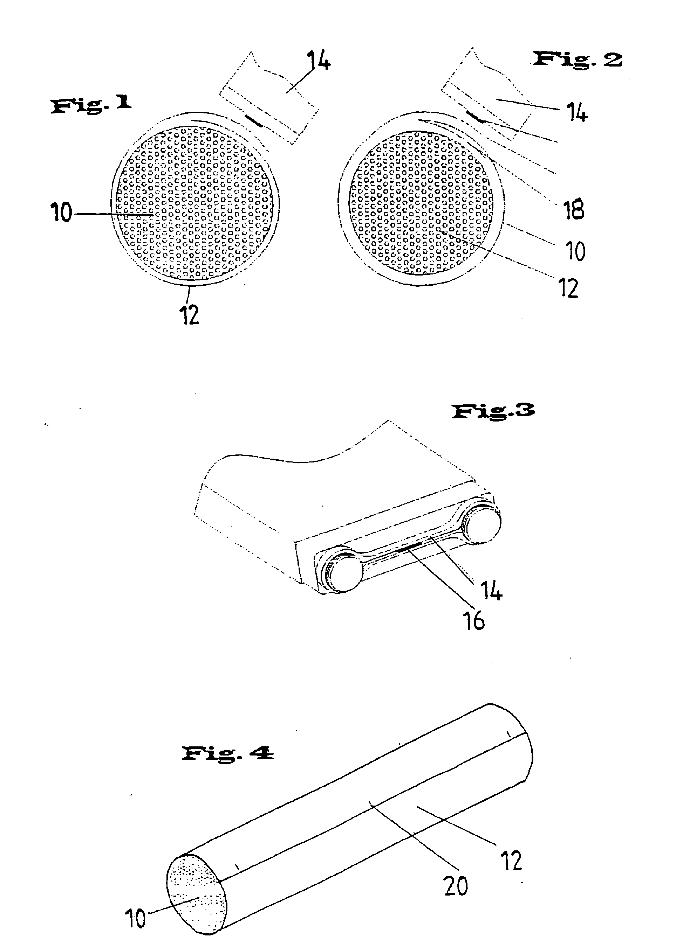

In Figur 1 ist ein Schnitt durch einen aufgehaspelten Membranfaserstrang 10 gezeigt, um den eine Wickelfolie 12 gewickelt wird. Beim Wickeln erfolgt eine Komprimierung des durch das Wickeln entstehenden Bündels auf eine bestimmte Pakkungsdichte. Weiterhin erhält das Bündel einen definierten Bündeldurchmesser, so dass das Bündel später in ein hier nicht näher dargestelltes Filtergehäuse, z. B. in ein Dialysatorgehäuse eingeformt werden kann. Die Wickelfolie 12 dient hierzu als Hilfsmittel. Nach dem Einbringen des Bündels in das Dialysatorgehäuse wird die Wickelfolie wieder entfernt. Nach dem Wickeln des Hohlfaserbündels muss die Wickelfolie fixiert werden. Dies geschieht nach der vorliegende Erfindung über ein Schweißwerkzeug 14, das beispielsweise in Figur 3 dargestellt ist. Es handelt sich hier um ein Wärmeimpulsschweißwerkzeug, bei dem ein elektrischer Leiter aufgeheizt wird. Dieses Aufheizen geschieht innerhalb sehr kurzer Zeit. Die Schweißzeit liegt im Bereich von ca. 0,3 bis 0,5 Sekunden. In Figur 3 ist mit 16 der Schweißbereich angezeigt.

Die Schwierigkeit bei Schweißen dünner Folien mit einem Wärmeimpulsschweißwerkzeug liegt darin, dass der Schweißprozeß korrekt parametriert wird. Wenn der Schweißprozeß nicht korrekt eingestellt wurde oder sich Abweichungen in den der Einstellung zugrunde gelegten Randbedingungen ergeben, können beispielsweise bei einem Schweißvorgang, wie er in Figur 1 dargestellt ist, verschiedene Schwierigkeiten auftreten. So kann beispielsweise der Überlappungsbereich der Folie nicht fest verschweißt sein. Des weiteren können bei zu starkem Schweißimpuls die Membranfasern mitverschweißt sein und an der Wickelfolie anhaften, so dass sie beim Einformen des Bündels in das Dialysatorgehäuse abgerissen werden. Des weiteren können die Membranfasern thermisch beschädigt sein, so dass kein Durchfluß mehr möglich ist. Schließlich können die Membranfäden aufgeschmolzen werden und unkontrolliert erstarren. Auch können an der Folieninnenseite sogenannte Schweißnasen durch das Aufschmelzen der Folie entstehen, an denen die Fasern beim Herausziehen der Wickelfolie hängenbleiben können oder sich Schlingen bilden. Diese Probleme können durch den Wickelprozeß aber auch beispielsweise bei einer Taktzeitveränderung entstehen.

Bei der Verfahrensfolge, wie sie in Figur 2 dargestellt ist, werden diese Probleme durch eine sehr einfache Maßnahme verhindert. Hier wird nämlich eine Seite der Wickelfolie am Rand gefaltet, so dass sich hier ein Umschlagbereich 18 bildet. Dieser Umschlagbereich 18 bildet eine Schutzschicht zwischen den Hohlfasern 10 und der zu verschweißenden Folie 12.

Hierdurch ergeben sich folgende Vorteile. Die Wickelfolie kann sicher verschweißt werden. Die Parametrierung des Schweißgerätes ist unkritisch. Bei dem in Figur 1 dargestellten Verfahren können 10° Temperaturabweichung die Schweißnahtqualität beeinflussen, das heißt die Fasern könnten beschädigt sein oder die Schweißnaht könnte die benötigte und gewünschte Festigkeit nicht aufweisen.

Bei der erfindungsgemäßen Wickelfolie mit dem Umschlagbereich 18 hätte auch eine Temperaturerhöhung des Schweißgeräts 14 von beispielsweise 50°C keinen Einfluß auf das Ergebnis. Der Energieeintrag reicht hier nicht aus, um die zusätzliche Lage zu verschweißen. Die Fasern bleiben somit unbeschädigt.

Aufgrund des Umschlagbereichs 18 entstehen auch keine Schweißnasen.

Da der Energieeintrag nicht mehr genau dosiert werden muss, kann mit höheren Temperaturen in kürzerer Zeit geschweißt werden. Das bedeutet aber, dass die Zykluszeit deutlich minimiert werden kann.

Falls nun die Schweißnaht über die Folienkante verläuft, schützen zwei Folienlagen die Hohlfaser 10 statt nur einer Lage. Diese Situation kann beispielsweise durch fehlerhaftes Wickeln eintreten.

In Figur 4 ist ein Hohlfaserbündel gezeigt, bei dem die Hohlfasern mittels der Wikkelfolie 12 umwickelt sind. Diese ist in ihrem Randbereich mit drei beabstandeten Schweißnähten 20 verschweißt.

## Patentansprüche

1. Verfahren zum Zusammenfassen von Hohlfasern zu einem Bündel bestehend aus folgenden Schritten:
- chargenweises Aufnehmen von kontinuierlich hergestellten Hohlfasern auf langsam rotierende Haspelvorrichtungen,
- Umwickeln der jeweils zwischen zwei Wickeldornen der Haspelvorrichtungen gespannten bündelartig zusammengelegten Hohlfasern mit einer Wickelfolie derart, dass die Kante der Wickelfolie, die beim Umwickeln der Wickelfolie unmittelbar auf dem Hohlfaserbündel liegt, nach innen zum Hohlfaserbündel hin umgeschlagen ist und
- Verschweißen der überlappenden Kantenbereiche der Wickelfolie.

2. Verfahren nach Anspruch 1, **dadurch gekennzeichnet, dass** die Wickelfolie über eine Vorrichtung, die vor dem Einziehen der Folie in die Wickelvorrichtung eingegliedert ist, an ihrem einen Randbereich gefaltet wird.

3. Verfahren nach Anspruch 1, **dadurch gekennzeichnet, dass** die Wickelfolie mit einem bereits vorgefalteten Randbereich bereitgestellt wird.

4. Verfahren nach Anspruch 1 oder 2, **dadurch gekennzeichnet, dass** das Verschweißen der Wickelfolie über Wärmeimpulsschweißwerkzeuge erfolgt.

5. Verfahren nach Anspruch 3, **dadurch gekennzeichnet, dass** die Schweißzeit kleiner als 10s beträgt

6. Verfahren nach Anspruch 4, **dadurch gekennzeichnet, dass** die Schweißzeit ca. 0,3 bis 0,5 s beträgt.

7. Verfahren nach einem der Ansprüche 1 - 6, **dadurch gekennzeichnet, dass** die überlappenden Kantenbereiche der Folie nur an voneinander beabstandeten Punkten miteinander verschweißt werden.

8. Verfahren nach einem der Ansprüche 1 - 6, **dadurch gekennzeichnet, dass** die überlappenden Kantenbereiche der Folie durch eine durchgehende Schweißnaht oder mehrere durchgehende Schweißnahtabschnitte miteinander verschweißt werden.

9. Hohlfaserbündel hergestellt in einem Verfahren nach einem der Ansprüche 1 bis 8.

## Claims

1. A method of combining hollow fibers to form a bundle consisting of the following steps:
- batch-wise taking up of continuously manufactured hollow fibers on slowly rotating reel apparatus;
- winding around of the respective hollow fibers tensioned between two winding mandrels of the reel apparatus and combined in the manner of a bundle with a winding film such that the edge of the winding film disposed directly on the hollow fiber bundle on the winding round of the winding film is folded over inwardly toward the hollow fiber bundle; and
- welding of the overlapping edge regions of the winding film.

2. A method in accordance with claim 1, wherein the winding film is folded at its one edge region via an apparatus which is incorporated prior to the drawing of the film into the winding apparatus.

3. A method in accordance with claim 1, wherein the winding film is made available with an already pre-folded edge region.

4. A method in accordance with either of claims 1 or 2, wherein the welding of the winding film takes place via heat impulse welding tools.

5. A method in accordance with claim 3, wherein the weld time amounts to less than 10 s.

6. A method in accordance with claim 4, wherein the weld time amounts to approximately 0.3 to 0.5 s.

7. A method in accordance with any one of the claims 1 - 6, wherein the overlapping edge regions of the film are only welded to one another at spots spaced apart from one another.

8. A method in accordance with any one of the claims 1 - 6, wherein the overlapping edge regions of the film are welded to one another by a continuous weld seam or a by a plurality of continuous weld seam sections.

9. A hollow fiber bundle manufactured in a method in accordance with any one of the claims 1 - 8.

## Revendications

1. Procédé destiné à regrouper des fibres creuses en un faisceau, composé des étapes suivantes :
- Recueillement par charge de fibres creuses fabriquées en continu sur des dispositifs à treuil à rotation lente,
- Enroulement des fibres réunies par faisceau et tendues respectivement entre deux mandrins de bobinage des dispositifs à treuils avec un film d'enroulement, de sorte que la bordure du film d'enroulement, qui repose directement sur le faisceau de fibres creuses lors de l'enroulement du film d'enroulement, est rabattu à l'intérieur vers le faisceau de fibres creuses et
- Soudure des zones d'arête chevauchantes du film d'enroulement.

2. Procédé selon la revendication 1, **caractérisé en ce que** le film d'enroulement est plié sur l'une de ses zones de bordure par l'intermédiaire d'un dispositif qui est intégré avant l'insertion du film dans le dispositif enrouleur.

3. Procédé selon la revendication 1, **caractérisé en ce que** le film d'enroulement est mis à disposition avec une zone de bordure déjà prépliée.

4. Procédé selon les revendications 1 ou 2, **caractérisé en ce que** la soudure du film d'enroulement s'effectue par l'intermédiaire d'outils de soudure par impulsion thermique.

5. Procédé selon la revendication 3, **caractérisé en ce que** le temps de soudure est inférieur à 10 s.

6. Procédé selon la revendication 4, **caractérisé en ce que** le temps de soudure est d'environ 0,3 à 0,5 s.

7. Procédé selon une quelconque des revendications 1 à 6, **caractérisé en ce que** les zones de bordure chevauchantes du film d'enroulement sont soudées les unes avec les autres uniquement sur des points espacés les uns des autres.

8. Procédé selon une quelconque des revendications 1 à 6, **caractérisé en ce que** les zones de bordure chevauchantes du film sont soudées les unes avec les autres par un cordon de soudure continu ou par plusieurs sections de cordon de soudure continu.

9. Faisceau de fibres creuses fabriqué dans un procédé selon une quelconque des revendications 1 à 8.
